# EUROPÄISCHE PATENTANMELDUNG

(11) **EP 4 282 642 A1**
(43) Veröffentlichungstag der Anmeldung: **29.11.2023**
(21) Anmeldenummer: 23173932.7
(22) Anmeldetag: 17.05.2023
(51) Int. Cl.: B32B 5/02, B32B 19/02, B32B 19/06

(54) **BIOLOGISCH ABBAUBARE ENTKOPPLUNGSBAHN**

(30) Priorität: 23.05.2022 DE 202022001236 U
(71) Anmelder: Oxiegen GmbH, 33175 Bad Lippspringe (DE)
(72) Erfinder: OVERKOTT, Philipp, 33449 Langenberg (DE)
(74) Vertreter: Wickord, Wiro

(57) **Zusammenfassung**

Die Erfindung betrifft eine biologisch abbaubare Entkopplungsbahn (1) umfassend eine Kernschicht (2), die beidseitig mit einem Baumwollvlies (3.1, 3.2) aufkaschiert ist, wobei die Kernschicht (2) aus mit einem biologisch abbaubaren Bindemittelklebstoff gebundenen Quarzsand und/oder Holzmehl besteht, wobei der Bindemittelklebstoff in Bezug auf die Kernschicht (2) einen Volumenanteil und Gewichtsanteil von jeweils maximal 20 % aufweist und wobei die Entkopplungsbahn (1) eine Gesamtdicke (G) im Bereich von 2 mm bis 3 mm aufweist.

## Beschreibung

Die vorliegende Erfindung betrifft eine biologisch abbaubare Entkopplungsbahn, insbesondere für holzbasierte beziehungsweise mineralische Bodenflächen im Wohn-, Gewerbe- und Industriebereich.

Entkopplungsbahnen sind in diversen Ausführungsformen am Markt erhältlich. Sie werden als eine Entkopplungsschicht zwischen einem Oberboden beziehungsweise Bodenbelag und einem Untergrund beziehungsweise Unterboden angeordnet.

Es besteht ein hoher Bedarf an Entkopplungsbahnen, die eine Trittschalldämmung bewirken. Die Trittschalldämmung soll eine störende Schallübertragung von Geräuschen, die insbesondere beim Gehen auf einem harten, steifen Oberbelag, wie beispielsweise Laminat, Parkett oder Fliesen erzeugt werden, in einen darunter liegenden Untergrund beziehungsweise Unterboden, wie beispielsweise Estrich, und damit in die darunterliegenden Räumlichkeiten verhindern. Entkopplungsbahnen zur Trittschalldämmung finden daher insbesondere bei Bodenflächen von Etagenwohnungen breite Anwendung. Die Entkopplungsbahnen fungieren hierbei als Schallbrücke, welche den harten Oberbelag und den massiven Untergrund beziehungsweise Unterboden voneinander entkoppeln. Für die Trittschalldämmung werden bevorzugt biegeweiche Materialien verwendet.

Neben der Trittschalldämmung sollen Entkopplungsbahnen leicht nachgiebige, druckelastische Eigenschaften aufweisen, um den Gehkomfort auf harten Oberbelägen zu verbessern.

Weiter sollen durch Entkopplungsbahnen Unebenheiten des Untergrundes beziehungsweise Unterbodens, beispielsweise Risse oder Fugen, ausgeglichen werden. Hierfür sind bevorzugt Materialien geeignet, die eine gute Druckfestigkeit aufweisen.

Zum Herstellen wieder aufnehmbarer Beläge beziehungsweise als Unterlagen für Fußbodenaufbauten werden in der Regel geringe Aufbauhöhen gefordert, sodass hierfür geeignete Entkopplungsbahnen eine möglichst geringe Gesamtdicke aufweisen sollen.

Ebenso wird oftmals eine Rollfähigkeit der Entkopplungsbahnen verlangt, um die Transport- und Lagerfähigkeit und das Verlegen am Verwendungsort zu verbessern.

Die am Markt erhältlichen Entkopplungsbahnen, die diese vorgenannten Eigenschaften erfüllen, weisen bislang anorganische beziehungsweise petrochemisch hergestellte, biologisch nicht abbaubare Materialien auf. Neben einem gesteigerten Umweltbewusstsein, insbesondere infolge des Klimawandels, haben auch gestiegene Rohölpreise und Versorgungsengpässe bei Rohöl dazu geführt, dass eine gesteigerte Nachfrage an Bauprodukten und damit Entkopplungsbahnen besteht, die aus nachhaltigen beziehungsweise natürlichen Materialien bestehen und eine biologische Abbaubarkeit der Produkte ermöglichen. Als biologisch abbaubar gilt ein Produkt, wenn es von Mikroorganismen in seine elementaren Bestandteile zersetzt werden kann. Die Zersetzungszeit ist dabei grundsätzlich unerheblich, kann jedoch durch Parameter, wie beispielsweise Temperatur, Druck oder UV-Strahlung, beeinflusst werden.

Aufgabe der vorliegenden Erfindung ist es daher eine Entkopplungsbahn anzugeben, welche die zuvor aufgezählten Anforderungen erfüllt und vorzugsweise vollständig biologisch abbaubar ist.

Zur Lösung der Aufgabe weist die Erfindung die Merkmale des Patentanspruchs 1 auf. Demzufolge umfasst eine biologisch abbaubare Entkopplungsbahn eine Kernschicht, die beidseitig mit einem Baumwollvlies aufkaschiert ist. Die Kernschicht besteht aus mit einem biologisch abbaubaren Bindemittelklebstoff gebundenen Quarzsand und/oder Holzmehl, wobei der Bindemittelklebstoff in Bezug auf die Kernschicht einen Volumenanteil und Gewichtsanteil von jeweils maximal 20 % aufweist und wobei die Entkopplungsbahn eine Gesamtdicke im Bereich von 2 mm bis 3 mm aufweist.

Der einfache, dreischichtige Aufbau der Entkopplungsbahn ermöglicht eine einfache und kostengünstige Fertigung. Dabei können die Kernschicht und das Baumwollvlies jeweils als vorfertigbares Halbzeug bereitgestellt und durch Kaschieren unter Druck und Hitze flächig miteinander verbunden werden. Durch die beidseitige Kaschierung der Kernschicht mit Baumwollvlies ist zudem die Verwendung beziehungsweise der Einbau der Entkopplungsbahn vereinfacht, da eine genaue Ausrichtung hinsichtlich der Schichten der Entkopplungsbahn nicht erforderlich ist.

Die ausgewählten Materialien machen die Entkopplungsbahn vollständig biologisch abbaubar, wodurch diese nach ihrem Gebrauch einer umweltfreundlichen und einfachen stofflichen Entsorgung zugeführt werden kann. Bevorzugt handelt es sich bei den ausgewählten Materialien für die Entkopplungsbahn jeweils um biokompatible Stoffe, die keinen negativen Einfluss auf Lebewesen in ihrer Umgebung haben. Insofern ist die Entkopplungsbahn frei von Weichmachern, Lösemitteln oder anderen bedenklichen Stoffen und kann somit auch in sensiblen Bereichen, wie Krankenhäusern, Pflegeheimen, Schulen, Kindergärten oder Räumen für Allergiker, verwendet werden.

Die Kernschicht mit dem von dem Bindemittelklebstoff elastisch gebundenen Quarzsand beziehungsweise Holzmehl als Füllmaterial verleiht der Entkopplungsbahn eine gewisse Masse und Formstabilität die dafür sorgt, dass sich die Entkopplungsbahn in Planlage und mit einer Anpassung an Unebenheiten auf einen Untergrund auflegen lässt. Sowohl Quarzsand als auch Holzmehl lassen sich dabei gut und homogen mit dem Bindemittelklebstoff verbinden. Der Anteil des Bindemittelklebstoffs an der Kernschicht ist erfindungsgemäß so gewählt, dass einerseits das Füllmaterial dabei in einer möglichst komprimierten Form vorliegt und der Entkopplungsbahn eine ausreichend hohe spezifische Dichte und damit Formstabilität verleiht. Andererseits wird das Füllmaterial durch den Bindemittelklebstoff eingebunden, wodurch die Kernschicht eine Zug- und Querzugfestigkeit erhält und das Füllmaterial beispielsweise vor Feuchtigkeitseintritt geschützt ist. Zudem verleiht der Bindemittelklebstoff der Kernschicht eine Elastizität, die ein reversibles Aufrollen der Entkopplungsbahn ermöglicht.

Mineralischer Quarzsand stellt ein besonders preiswert zu beschaffendes, natürlich vorkommendes Füllmaterial dar, welches eine hohe spezifische Dichte und eine gute chemische Beständigkeit und Feuerfestigkeit aufweist. Die hohe spezifische Dichte des Quarzsandes ist gut zur Dämmung von Raumschall geeignet und verhindert beispielsweise einen Hohlklang des Fußbodens, wenn er mit hartem Schuhwerk begangen wird. In dem vorgeschlagenen Verbund mit dem Bindemittelklebstoff verleiht der Quarzsand der Kernschicht insbesondere eine besonders hohe Druckfestigkeit.

Holzmehl weist grundsätzlich ein gutes Trittschalldämmungspotenzial sowie gute thermische Dämmeigenschaften auf und kann aus dem nachwachsenden, natürlichen Rohstoff Holz gewonnen werden. Es fällt beispielsweise als Abfall- beziehungsweise Nebenprodukt in Form von Schleifstaub beim Schleifen von Holz oder in Form von Sägemehl oder Sägespänen bei der spanabhebenden Verarbeitung beziehungsweise beim Sägen von Holz an.

Der biologisch abbaubare Bindemittelklebstoff sorgt neben dem Einbinden der Füllstoffe in der Kernschicht beim Kaschieren der Kernschicht mit dem Baumwollvlies, welches unter hohem Druck und Hitze erfolgt, dafür, dass das Holzmehl beziehungsweise der Quarzsand abgebunden werden und sich die Kernschicht und die beiden äußeren Schichten aus Baumwollvlies gut miteinander verbinden lassen.

Die beidseitige flächige Kaschierung der Kernschicht aus Baumwollvlies dient der Kernschicht als Armierungs- beziehungsweise Stützschicht und sorgt dafür, dass eingeleitete Kräfte flächiger an die Kernschicht verteilt werden. Zudem sorgt das Baumwollvlies für gute Trittschalldämmeigenschaften der Entkopplungsbahn. Vlies gilt diesbezüglich im Allgemeinen als ein besonders bevorzugtes Material, da sich in den vernetzten Vliesfasern mit einer bevorzugt unterschiedlichen Länge und Dicke der Schall besonders schnell verliert. Die Baumwollvlieskaschierung ermöglicht zudem ein vollflächiges Verbinden beziehungsweise Verkleben der Entkopplungsbahn mit dem Untergrund beziehungsweise Unterboden. Zudem weist das Baumwollvlies eine hohe Reißfestigkeit bei einer hohen Biegefähigkeit auf.

Bei dem Baumwollvlies handelt es sich um ein textiles Flächengebilde, wobei Baumwolle ein nicht unwesentlicher Hauptbestandteil davon ist. Vorzugsweise beträgt dabei der Massenanteil beziehungsweise Gewichtsanteil an Baumwolle beziehungsweise Baumwollfasern wenigstens 20 % am Faseranteil des Baumwollvlieses.

Mit den ausgewählten Materialien wird eine geringe Gesamtdicke der Entkopplungsbahn ermöglicht. Hierdurch kann die Entkopplungsbahn bei Bodensanierungen beziehungsweise Fußbodenaufbauten, wo eine geringe Einbauhöhe gefordert ist, zum Einsatz kommen. Zudem weist die erfindungsgemäße Entkopplungsbahn aufgrund ihrer ausgewählten Materialien und der geringen Gesamtdicke eine reversible Rollfähigkeit auf, wodurch sie sich besonders kompakt lagern und transportieren und am Verwendungsort vereinfacht applizieren beziehungsweise verarbeiten lässt.

Nach einer bevorzugten Ausführungsform der Erfindung weist die Kernschicht eine Schichtdicke im Bereich von 1 mm bis 1,5 mm auf. Hierdurch weist die Entkopplungsbahn ein besonders vorteilhaftes Verhältnis aus biegeweicher, schalldämmender Baumwollvlieskaschierung und dichtem beziehungsweise formstabilem Füllmaterialgebinde auf.

Der Quarzsand der Kernschicht weist vorzugsweise eine Körnung mit einer Korngröße im Bereich von 0,1 mm bis 0,4 mm auf. Diese Körnung mittlerer Größe hat sich in Bezug auf die Verarbeitung beziehungsweise Einbindung in den Bindemittelklebstoff als besonders geeignet herausgestellt.

In einer Ausführungsform der Erfindung besteht die Kernschicht ausschließlich aus mit dem Bindemittelklebstoff gebundenen Holzmehl. Diese Ausführungsform ist besonders vorteilhaft, wenn durch die Entkopplungsbahn eine gute Trittschalldämmung und Wärmedämmung erzielt werden soll.

Vorzugsweise weist bei dieser Ausführungsform der Erfindung der Bindemittelklebstoff in Bezug auf die Kernschicht einen Volumenanteil und Gewichtsanteil jeweils im Bereich von 10 % bis 20 % auf.

In einer alternativen Ausführungsform der Erfindung besteht die Kernschicht ausschließlich aus mit dem Bindemittelklebstoff gebundenen Quarzsand. Diese Ausführungsform ist besonders vorteilhaft, wenn die Entkopplungsbahn eine hohe Festigkeit und Druckstabilität sowie eine Raumschalldämmung aufweisen soll.

Vorzugsweise weist bei dieser Ausführungsform der Erfindung der Bindemittelklebstoff in Bezug auf die Kernschicht einen Volumenanteil und Gewichtsanteil von jeweils maximal 10 % auf.

Nach einer Weiterbildung der Erfindung ist der biologisch abbaubare Bindemittelklebstoff ein Schmelzklebstoff (Hotmelt). Hierbei handelt es sich um thermoplastische Klebstoffe, die bei Raumtemperatur einen festen Zustand aufweisen und sich durch Erwärmung flüssig aufschmelzen lassen. Schmelzklebstoffe weisen im geschmolzenen Zustand eine hohe Viskosität auf, wodurch sie einen guten Haftverbund mit porösen als auch nicht porösen Materialien eingehen. Die Herstellung der Klebeverbindung erfolgt dabei vorteilhaft ohne lange Trocknung und Aushärtung, sodass die Kernschicht mit hoher Produktionsgeschwindigkeit hergestellt werden kann. Zur Verarbeitung wird der Schmelzklebstoff in der Regel in Pulverform bereitgestellt. Ein bevorzugter Kornbereich des Schmelzklebstoffpulvers liegt im Bereich zwischen 100 µm und 500 µm.

Für die erfindungsgemäß geforderte biologische Abbaubarkeit des Bindemittelklebstoffs kommen bevorzugt Schmelzklebstoffe auf Basis von Polycarpolacton, auch als Poly-ε-Caprolacton oder kurz PLC bezeichnet, zum Einsatz, welche in natürlicher Umgebung unter Einwirkung von Mikroorganismen abgebaut werden können. Daneben sind bereits geeignete, biologisch abbaubare Schmelzklebstoffe auf Basis nachwachsender Rohstoffe, wie beispielsweise Polyactid beziehungsweise Polymilchsäure (PLA) am Markt erhältlich.

Ein bevorzugter Schmelzbereich des Bindemittelklebstoffs liegt im Bereich von 60 °C bis 65 °C. Dies ermöglicht eine energiesparende und somit umweltfreundlichere Herstellung der Entkopplungsbahn bei niedrigen Temperaturen.

Nach einer Weiterbildung der Erfindung ist das Baumwollvlies aus einem Faserverbund mit Fasern aus Baumwolle und Viskose beziehungsweise Polyactid (PLA) hergestellt. Diese Grundstoffe sind jeweils auf Basis natürlicher, nachwachsender Rohstoffe hergestellt und weisen eine gute biologische Abbaubarkeit auf.

Fasern aus Baumwolle sind Naturfasern und weisen eine gute Reißfestigkeit und ein geringes Allergiepotenzial auf. Zudem besitzen sie eine gute Quell- beziehungsweise Saugfähigkeit.

Viskosefasern werden nach dem Viskoseverfahren chemisch aus natürlichem Zellstoff (Cellulose), insbesondere aus Buchen-, Fichten-, Bambus- oder Eukalyptusholz, gewonnen und weisen neben guten, flexiblen Verarbeitungseigenschaften, beispielsweise zu Filament beziehungsweise Langfasern, eine gute biologische Abbaubarkeit auf.

Polyactid ist ein Vliesstoff aus polymerisierter Milchsäure, auch Polymilchsäure genannt, welcher aus nachwachsenden Rohstoffen, insbesondere aus Maisstärke, gewonnen werden kann. Er wird daher auch den Biokunststoffen zugeordnet und ist biologisch abbaubar, recyclingfähig und biokompatibel. Und weist ein vergleichsweise hohes Festigkeits-/Gewichtsverhältnis auf.

Das Baumwollvlies weist vorzugsweise ein Flächengewicht beziehungsweise eine Grammatur von etwa 200 g/m² auf. Hierdurch kann bei einer geringen Vliesdicke eine gute Trittschalldämmungswirkung realisiert werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein.

Die Zeichnungen dienen lediglich beispielhaft der Klarstellung der Erfindung und haben keinen einschränkenden Charakter.

Es zeigen:
- Fig. 1: einen Querschnitt durch eine erfindungsgemäße Entkopplungsbahn in einer ersten Ausführungsform und
- Fig. 2: einen Querschnitt durch eine erfindungsgemäße Entkopplungsbahn in einer zweiten Ausführungsform.

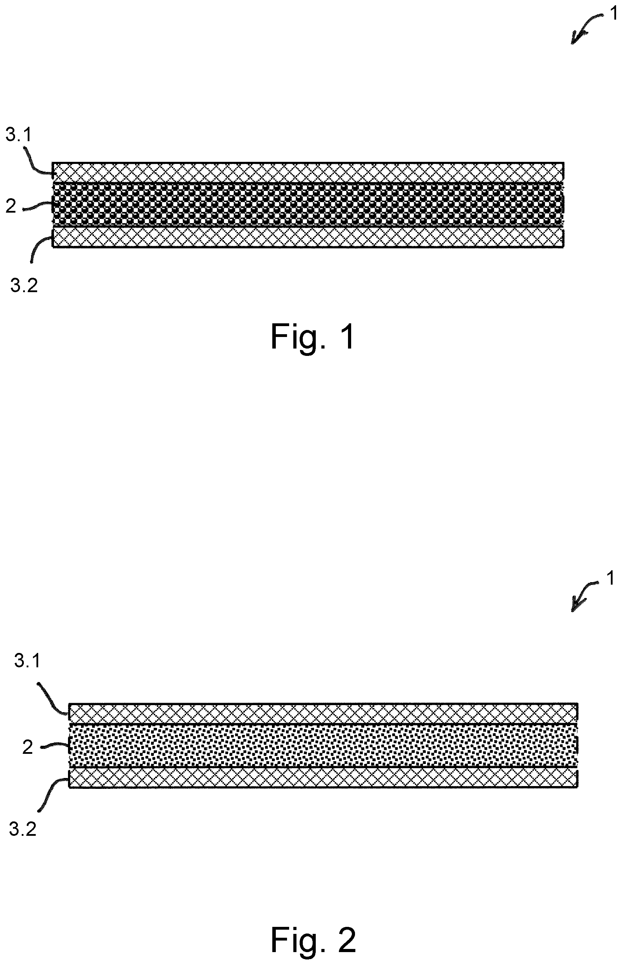

Die Fig. 1 und Fig. 2 geben zwei verschiedene Ausführungsformen einer erfindungsgemäßen biologisch abbaubaren, das heißt durch Mikroorganismen zersetzbaren, Entkopplungsbahn 1 an. Bauseitig dient die Entkopplungsbahn insbesondere der (Schall-) Entkopplung eines (figürlich nicht dargestellten) Oberbodens mit einem Unterboden beziehungsweise Untergrund und der Überbrückung beziehungsweise dem Ausgleich von Unebenheiten. Jeweils weist die erfindungsgemäße Entkopplungsbahn 1 eine Kernschicht 2 auf, die an ihren einander gegenüberliegenden Hauptoberflächen beidseitig vollflächig mit einem Baumwollvlies 3.1, 3.2 aufkaschiert ist.

Das gewebte Baumwollvlies 3.1, 3.2 gibt eine Tragstruktur beziehungsweise Armierungsschicht für die Kernschicht 2 an und weist zudem ein hohes Trittschalldämmungspotenzial auf. Es kann bauseitig gut mit einem Untergrund beziehungsweise Unterboden verklebt werden. Das Baumwollvlies 3.1, 3.2 besteht vorzugsweise aus einem Faserverbund mit den aus natürlichen, nachwachsenden Rohstoffen gewonnenen biologisch abbaubaren Hauptkomponenten Baumwolle, Viskose und Polyactid beziehungsweise Polymilchsäure (PLA). Der Anteil an Baumwollfasern an dem Faserverbund des Baumwollvlieses 3.1, 3.2 beträgt vorzugsweise mindestens 20 Vol.-% beziehungsweise mindestens 20 Gew.-%.

Die Kernschicht 2 weist Quarzsand beziehungsweise Holzmehl als Füllmaterial auf, welches der Entkopplungsbahn 1 Formstabilität verleiht und eine Planlage ermöglicht. Das Füllmaterial ist mit einem biologisch abbaubaren Bindemittelklebstoff, vorzugsweise ein thermoplastischer Schmelzklebstoff, eingebunden.

Der Bindemittelklebstoff wird beim Kaschieren der Kernschicht 2 mit dem Bindemittelvlies 3.1, 3.2 unter Druck und Temperatur aufgeschmolzen, wobei der Quarzsand beziehungsweise das Holzmehl abgebunden werden und sich die drei Schichten 2, 3.1, 3.2 gut miteinander verbinden lassen. Der Volumenanteil und Gewichtsanteil des Bindemittelklebstoffs betragen in Bezug auf die Kernschicht 2 erfindungsgemäß jeweils maximal 20 %.

Die ausgewählten Materialien ermöglichen es, die erfindungsgemäße Entkopplungsbahn 1 mit einer geringen Gesamtdicke im Bereich von 2 mm bis 3 mm und reversibel rollfähig auszubilden. Dadurch kann die Entkopplungsbahn 1 zur Entkopplung beziehungsweise Trittschalldämmung von Fußbodenaufbauten beziehungsweise bei Fußbodensanierungen zum Einsatz kommen, wo in der Regel geringe Aufbauhöhen gefordert werden.

Fig. 1 gibt eine erste Ausführungsform der erfindungsgemäßen Entkopplungsbahn 1 schematisch im Querschnitt an, wobei die Kernschicht 2 aus mit einem biologisch abbaubaren Bindemittelklebstoff gebundenen Quarzsand als Füllmaterial gebildet ist. Der Quarzsand verleiht der Entkopplungsbahn 1 eine hohe spezifische Dichte.

Eine alternative zweite Ausführungsform der erfindungsgemäßen Entkopplungsbahn 1 ist in der Fig. 2 schematisch im Querschnitt dargestellt. Die Kernschicht 2 ist hierbei aus mit dem biologisch abbaubaren Bindemittelklebstoff gebundenen Holzmehl als Füllmaterial gebildet. Das Holzmehl verleiht der Entkopplungsbahn 1 wärmedämmende Eigenschaften sowie eine besonders gute Trittschalldämmungswirkung.

Die Erfindung ist nicht auf die figürlich dargestellten Ausführungsformen der Entkopplungsbahn 1 beschränkt. Nach einer weiteren alternativen Ausführungsform der Entkopplungsbahn 1 ist vorgesehen, dass die Kernschicht 2 als Füllmaterial sowohl Quarzsand als auch Holzmehl enthält. Diesbezüglich sind in Abhängigkeit von einer beabsichtigten Verwendung der Entkopplungsbahn 1 verschiedene Mengenverhältnis von Quarzsand gegenüber Holzmehl denkbar. Ebenso kann hierbei der Anteil des Bindemittelklebstoffs im Rahmen des erfindungsgemäß vorgesehenen Bereichs variieren.

Gleiche Bauteile und Bauteilfunktionen sind durch gleiche Bezugszeichen gekennzeichnet.

## Patentansprüche

1. Biologisch abbaubare Entkopplungsbahn (1) umfassend eine Kernschicht (2), die beidseitig mit einem Baumwollvlies (3.1, 3.2) aufkaschiert ist, wobei die Kernschicht (2) aus mit einem biologisch abbaubaren Bindemittelklebstoff gebundenen Quarzsand und/oder Holzmehl besteht, wobei der Bindemittelklebstoff in Bezug auf die Kernschicht (2) einen Volumenanteil und Gewichtsanteil von jeweils maximal 20 % aufweist und wobei die Entkopplungsbahn (1) eine Gesamtdicke (G) im Bereich von 2 mm bis 3 mm aufweist.

2. Entkopplungsbahn (1) nach Anspruch 1, **dadurch gekennzeichnet, dass** die Kernschicht (2) eine Schichtdicke (S) im Bereich von 1 mm bis 1,5 mm aufweist.

3. Entkopplungsbahn (1) nach Anspruch 1 oder 2, **dadurch gekennzeichnet, dass** der Quarzsand der Kernschicht (2) eine Körnung mit einer Korngröße im Bereich von 0,1 mm bis 0,4 mm aufweist.

4. Entkopplungsbahn (1) nach einem der Ansprüche 1 bis 3, **dadurch gekennzeichnet, dass** das Holzmehl der Kernschicht (2) Sägespäne umfasst oder aus Sägespänen besteht.

5. Entkopplungsbahn (1) nach einem Anspruch 1 oder 2 oder 4, **dadurch gekennzeichnet, dass** die Kernschicht (2) ausschließlich aus mit dem Bindemittelklebstoff gebundenen Holzmehl besteht.

6. Entkopplungsbahn (1) nach Anspruch 5, **dadurch gekennzeichnet, dass** der Bindemittelklebstoff in Bezug auf die Kernschicht (2) einen Volumenanteil und Gewichtsanteil jeweils im Bereich von 10 % bis 20 % aufweist.

7. Entkopplungsbahn (1) nach einem der Ansprüche 1 bis 3, **dadurch gekennzeichnet, dass** die Kernschicht (2) ausschließlich aus mit dem Bindemittelklebstoff gebundenen Quarzsand (4) besteht.

8. Entkopplungsbahn (1) nach Anspruch 7, **dadurch gekennzeichnet, dass** der Bindemittelklebstoff in Bezug auf die Kernschicht (2) einen Volumenanteil und Gewichtsanteil von jeweils maximal 10 % aufweist.

9. Entkopplungsbahn (1) nach einem der Ansprüche 1 bis 8, **dadurch gekennzeichnet, dass** der Bindemittelklebstoff ein Schmelzklebstoff ist.

10. Entkopplungsbahn (1) nach einem der Ansprüche 1 bis 9, **dadurch gekennzeichnet, dass** der Bindemittelklebstoff eine Temperaturbeständigkeit bis mindestens 40 °C aufweist.

11. Entkopplungsbahn (1) nach einem der Ansprüche 1 bis 10, **dadurch gekennzeichnet, dass** der Bindemittelklebstoff eine Schmelztemperatur im Bereich von 60 °C bis 65 °C aufweist.

12. Entkopplungsbahn (1) nach einem der Ansprüche 1 bis 11, **dadurch gekennzeichnet, dass** das Baumwollvlies (3.1, 3.2) aus einem Faserverbund mit Fasern aus Baumwolle und Viskose und/oder Polyactid hergestellt ist.

13. Entkopplungsbahn (1) nach einem der Ansprüche 1 bis 12, **dadurch gekennzeichnet, dass** das Baumwollvlies (3.1, 3.2) ein Flächengewicht von 200 g/m² aufweist.
